# DEMANDE DE BREVET EUROPEEN

(11) **EP 1 752 943 A1**
(43) Date de publication de la demande: **14.02.2007**
(21) Numéro de dépôt: 06300866.8
(22) Date de dépôt: 08.08.2006
(51) Int. Cl.: G08B 13/14

(54) **Système de protection de poste de travail avec gestion centralisée par réseau**

(30) Priorité: 08.08.2005 FR 0552464
(71) Demandeur: S.A.A.A. SAS SYSTEMES D'AUTOMATISMES D'ALARMES AUTOMATIQUES, 28320 Gallardon (FR)
(72) Inventeur: Gresset, Eric, 28300 Jouy (FR); Billiars, Jean-Pierre, 28110 Luce (FR)
(74) Mandataire: Catherine, Alain

(57) **Abrégé**

L'invention concerne un système (1) de télésurveillance d'objets (12,13) d'un utilisateur, la présence des objets étant surveillée à distance par un poste de contrôle (2) informatique sur réseau informatique et par l'intermédiaire dudit réseau informatique. Selon l'invention, au moins une centrale maître (5) possédant un identifiant unique est reliée au réseau à au moins un détecteur (9) ayant des statuts en relation avec la présence ou non d'un objet, le poste de contrôle étant informé desdits changements de statut par l'intermédiaire du réseau, et l'utilisateur possède éventuellement un moyen personnel d'identification lisible par un lecteur (7) de la centrale maître et ladite centrale maître comporte des moyens pour, dans un état de surveillance, attendre les changements de statut et la lecture du moyen d'identification, pour passer dans un état d'alerte suite à un changement de statut pour passer dans un état neutralisé pendant un temps de neutralisation déterminé par lecture du moyen personnel d'identification, ledit état empêchant le passage dans un état d'alerte ou replaçant dans un état de surveillance une centrale maître qui était dans un état d'alerte et pour informer le poste de contrôle d'une alarme d'au moins séparation lorsque l'état d'alerte a été maintenu pendant un temps supérieur à un temps de pré-alarme déterminé.

## Description

L'invention se rapporte à un système de télésurveillance des objets qui sont sous la responsabilité ou non d'un utilisateur. Elle a des applications dans le domaine de la protection contre le vol d'équipements divers, génériquement appelés ici objets, auxquels un/des utilisateurs peuvent avoir accès et qui, pour certains de ces objets, peuvent être empruntés. Elle est plus particulièrement applicable à la protection d'un poste de travail comportant des objets (ordinateur, écran, tiroir, téléphone, mobilier...) mis à la disposition d'un ou d'utilisateurs ou d'objets en libre service (équipement de salle de réunion...). Elle met en oeuvre un réseau informatique pré-existant et est donc particulièrement bien adaptée à un environnement industriel ou de bureaux (réseau informatique interne et/ou externe). Une centrale maître adaptée pour utilisation dans le système complète l'invention.

La surveillance contre le vol d'objets dans le domaine commercial est largement développée et on connaît des dispositifs avec des détecteurs fixés sur des objets et reliés par liaison filaire à une centrale d'alarme. Ces dispositifs sont limités aux présentoirs d'objets commerciaux mis à la disposition de consommateurs. Du fait de l'évolution des techniques de vente (modification de la présentation, évolutions des produits ou changement de gamme dans les produits) et du coût de la protection (les objets onéreux sont protégés en priorité), les dispositifs mis en oeuvre sont en général assez limités dans leur extension et doivent être prévus pour des modifications/évolutions fréquentes.

Or, on peut également trouver des objets qui sont mis à la disposition de personnes dans d'autres environnements que commercial et c'est le cas du lieu de travail où l'employeur peut mettre à disposition d'utilisateurs des équipements (outils, matériel informatique, matériel de communication...) dont le coût peut être relativement important. Des risques de vol sont donc également présents sur le lieu de travail, non pas tant par la personne qui est responsable des objets mis à sa disposition sur son poste de travail, que de tiers pouvant profiter d'une absence du responsable pour s'emparer d'un objet.

Le lieu de travail est en général équipé avec un réseau informatique et des prises de connexion au dit réseau sont disponibles dans les divers postes de travail et le système de l'invention va donc utiliser ce moyen de communication pour assurer la télésurveillance d'objets mis à la disposition d'un ou plusieurs utilisateurs sur un poste de travail.

Ainsi l'invention concerne un système de télésurveillance par centrale maître, d'objets d'un utilisateur dans un lieu de base, la présence des objets dans ce lieu de base étant surveillée à distance par un poste de contrôle informatique sur réseau informatique et par l'intermédiaire dudit réseau informatique.

Selon l'invention, au moins une centrale maître possédant un identifiant unique est reliée d'une part au réseau et d'autre part à au moins un détecteur en relation avec un objet, la séparation du détecteur de l'objet ou sa mise en relation entraînant des changements de statut du détecteur transmis à la centrale maître, le poste de contrôle étant informé (en temps réel ou quasi-réel) desdits changements de statut par l'intermédiaire du réseau, et l'utilisateur possède éventuellement un moyen personnel d'identification lisible par un lecteur de la centrale maître et ladite centrale maître comporte des moyens :
- pour, dans un état de surveillance, attendre les changements de statut des détecteurs et la lecture du moyen d'identification,
- pour passer dans un état d'alerte suite au changement de statut du détecteur correspondant au moins à la séparation,
- pour passer dans un état neutralisé pendant un temps de neutralisation déterminé lorsque l'utilisateur fait lire par la centrale maître son moyen personnel d'identification, l'identification lue correspondant à une identification autorisée par le système, ledit état neutralisé empêchant le passage dans un état d'alerte une centrale maître en état de surveillance ou replaçant dans un état de surveillance une centrale maître qui était dans un état d'alerte,
- pour informer le poste de contrôle d'une alarme d'au moins une séparation lorsque l'état d'alerte a été maintenu pendant un temps supérieur à un temps de pré-alarme déterminé.

Dans divers modes de mise en oeuvre de l'invention, les moyens suivants pouvant être utilisés seuls ou selon toutes les combinaisons techniquement possibles, sont employés :
- le réseau informatique est un réseau interne à une entité, (par exemple INTRANET)
- le réseau informatique est un réseau global, (par exemple INTERNET)
- le poste de contrôle est relié par une liaison informatique (INTRANET, EXTRANET, INTERNET isolément ou en combinaison) à au moins un équipement informatique distant, ledit équipement informatique distant étant informé des alarmes,
- le poste de contrôle est relié par une liaison téléphonique (RTC ou radio téléphonique cellulaire) à au moins un équipement téléphonique portable ou fixe, ledit équipement téléphonique portable étant informé des alarmes par messages vocaux,
- le moyen personnel d'identification est une carte ou badge (tout support pouvant comporter une puce électronique) à puce à lecture à contact, (la centrale maître comporte donc un lecteur adapté)
- le moyen personnel d'identification est une carte ou badge (tout support pouvant comporter une puce électronique) à puce à lecture sans contact, (la centrale maître comporte donc un lecteur adapté)
- le moyen personnel d'identification est une carte ou badge à code à barres, (la centrale maître comporte donc un lecteur adapté)
- le moyen personnel d'identification est une carte ou badge à piste magnétique, (la centrale maître comporte donc un lecteur adapté)
- le moyen personnel d'identification est une lecture d'un paramètre biométrique de l'utilisateur, (la centrale maître comporte donc un lecteur adapté)
- dans l'état d'alarme, une lecture reconnue du moyen d'identification ramène à l'état neutralisé,
- dans l'état d'alarme, une lecture reconnue du moyen d'identification ramène à l'état de surveillance,
- la centrale maître comporte en outre des moyens pour que dans un état d'alerte, ladite centrale maître émette un signal sonore d'alerte audible (continu ou discontinu) et/ou un signal visuel d'alerte visible, (par exemple allumage d'une DEL en continu ou clignotante)
- la centrale maître comporte en outre des moyens pour que, lorsque la centrale maître a informé le poste de contrôle d'une alarme, ladite centrale maître émettre pendant une durée d'alarme déterminée ou jusqu'à acquittement par le poste de contrôle, un signal sonore d'alarme audible (continu ou discontinu) et/ou un signal visuel d'alarme visible (par exemple allumage d'une DEL en continu ou clignotante), l'état neutralisé empêchant/arrêtant ladite émission sonore et/ou visuelle d'alarme,
- l'intensité du signal sonore d'alarme est supérieure à celle du signal sonore d'alerte,
- la centrale maître comporte en outre des moyens pour passer dans un état d'alerte suite à tout changement de statut du détecteur et pour informer le poste de contrôle d'une alarme dudit changement de statut lorsque l'état d'alerte a été maintenu pendant un temps supérieur à un temps de pré-alarme déterminé,
- le système comporte en outre des moyens pour que le passage dans l'état neutralisé ne se fasse que si l'identification lue correspond à une identification d'utilisateur autorisée pour la centrale maître correspondante, (recherche de correspondance entre l'identification lue de l'utilisateur et une identification stockée dans le système d'un utilisateur autorisé pour la centrale maître en question)
- la centrale maître comporte en outre des moyens pour que le passage dans l'état neutralisé ne se fasse que si l'identification lue correspond à une identification d'utilisateur autorisée pour la centrale maître correspondante,
- au moins une identification d'utilisateur autorisé est stockée localement dans la centrale maître ou dans un détecteur relié à la centrale maître (par mise en oeuvre d'un détecteur numérique),
- le détecteur correspondant comporte une mémoire de stockage non volatile (mémoire morte re-programmable, flash® ou sauvegardée par exemple) d'au moins une identification d'utilisateur autorisé,
- la centrale maître correspondante comporte une mémoire de stockage non volatile (mémoire morte re-programmable, flash® ou sauvegardée par exemple) d'au moins une identification d'utilisateur autorisé,
- l'identification d'utilisateur autorisé stocké localement (dans la centrale maître ou le détecteur correspondant) provient du poste de contrôle par le réseau,
- l'entrée pour stockage local de l'identification d'utilisateur autorisé (dans la centrale maître ou le détecteur correspondant) est effectuée directement sur la centrale maître par la connexion sur la centrale maître ou le détecteur d'un module de programmation locale,
- l'identification d'utilisateur autorisé stocké localement (dans la centrale maître ou le détecteur correspondant) provient du poste de contrôle par le réseau ou a été stockée directement localement par connexion sur la centrale maître ou le détecteur d'un module de programmation locale,
- la recherche de la correspondance entre l'identification lue et une identification autorisée est effectuée soit par la centrale maître, soit dans le poste de contrôle, dans le cas du poste de contrôle, l'identification lue ainsi que l'identifiant de la centrale maître correspondante sont envoyés par le réseau au poste de contrôle qui possède une mémoire de stockage d'au moins un identifiant autorisé pour une centrale maître donnée, le résultat de la recherche d'une correspondance entre l'identification lue + identifiant de centrale maître d'avec celles+ceux autorisés stockés dans le poste de contrôle étant renvoyé par le réseau à la centrale maître correspondante,
- une absence de réponse quant au résultat au bout d'un temps d'attente déterminé est équivalent à une absence de correspondance pour la centrale maître,
- chaque détecteur possède un identifiant de détecteur unique pour une centrale maître donnée,
- l'information de changement d'état d'un détecteur envoyée au poste de contrôle est accompagnée de l'identifiant de centrale maître et du détecteur concernés,
- la centrale maître (et/ou le poste de contrôle selon que la recherche de correspondance est effectuée seulement dans la centrale maître ou avec le poste de contrôle, donc plus généralement : le système) comporte en outre des moyens pour que le passage dans l'état neutralisé ne soit efficace (en pratique empêche le passage dans l'état d'alerte ou autorise le passage de l'état d'alerte vers l'état de surveillance) que si l'identification lue correspond à une identification d'utilisateur autorisée pour la centrale maître correspondante et le détecteur correspondant, (les autorisations sont gérées jusqu'au niveau détecteur)
- le/les détecteurs sont reliés soit en direct à la centrale soit par l'intermédiaire d'au moins un module esclave répartiteur,
- la liaison entre la centrale, le/les éventuels modules esclaves et le/les détecteurs est filaire,
- la liaison entre la centrale, le/les modules esclaves est par ondes radiofréquence,
- les détecteurs fonctionnent en tout ou rien, (il ne peut être détecté que la présence et l'absence de l'objet ou coupure de la liaison au détecteur),
   les détecteurs fonctionnent selon des niveaux analogiques, (outre la présence et l'absence de l'objet, les tentatives de sabotage peuvent être détectée, détecteurs d'au moins 4 états correspondants à détecteur connecté ou non et détecteur séparé ou non de l'objet),
- les détecteurs fonctionnent selon un mode numérique, (outre la présence de l'objet, les tentatives de sabotage peuvent être détectées, détecteur au moins 4 états correspondants à détecteur connecté ou non et détecteur séparé ou non de l'objet),
- le poste de contrôle comporte des moyens permettant de vérifier périodiquement que chaque centrale maître reste connectée au réseau, et lorsqu'une centrale maître n'est plus connectée une alarme de déconnexion se déclenche dans le poste de contrôle,
   le réseau est filaire et chaque centrale maître est alimentée électriquement par le réseau,
- le réseau est filaire et chaque centrale maître est alimentée par sa propre alimentation secteur,
- l'alimentation de la centrale maître est secourue par une source électrochimique choisie parmi les piles ou batteries rechargeables,
- le réseau est radio et chaque centrale maître est alimentée par sa propre alimentation secteur,
- l'alimentation secteur est secourue par une source électrochimique choisie parmi les piles ou batteries rechargeables,
- au moins un des détecteurs est un détecteur périmétrique, (détection de présence et/ou de mouvement d'un individu ou objet dans un espace, par exemple radar RF, détecteur infrarouge, barrière lumineuse...)
- une centrale donnée est dédiée à la télésurveillance des objets du poste de travail d'un utilisateur particulier,
- le système comporte un ensemble de centrales maître pour plusieurs utilisateurs avec un ensemble d'objets dont certains peuvent être utilisables en commun par plusieurs utilisateurs,
- certain desdits objets peuvent être déplacés temporairement dudit lieu de base pour une utilisation en un autre lieu et le poste de contrôle comporte des moyens, d'une part, de comptage de la période de temps écoulée depuis la réception par le poste de contrôle de l'information de changement de statut correspondant à une séparation du détecteur et, d'autre part, d'avertissement lorsque ladite période de temps a dépassé une durée d'autorisation déterminée, la réception d'une information de changement de statut correspondant à une mise en relation (entre l'objet et ledit détecteur) annulant le comptage de ladite période.

L'invention concerne également une centrale maître qui est adaptée pour fonctionner dans le système de télésurveillance sur réseau informatique selon l'une ou plusieurs des caractéristiques précédentes et qui possède un identifiant unique, qui est reliée d'une part au réseau et d'autre part à au moins un détecteur en relation avec un objet, la séparation du détecteur de l'objet ou sa mise en relation entraînant des changements de statut du détecteur transmis à la centrale maître, un poste de contrôle étant informé desdits changements de statut par l'intermédiaire du réseau, et un utilisateur possède éventuellement un moyen personnel d'identification lisible par un lecteur de la centrale maître et ladite centrale maître comportant des moyens :
- pour, dans un état de surveillance, attendre les changements de statut des détecteurs et la lecture du moyen d'identification,
- pour passer dans un état d'alerte suite au changement de statut du détecteur correspondant au moins à la séparation,
- pour passer dans un état neutralisé pendant un temps de neutralisation déterminé lorsque l'utilisateur fait lire par la centrale maître son moyen personnel d'identification, l'identification correspondant à une identification autorisée par le système, ledit état empêchant le passage dans un état d'alerte une centrale maître en état de surveillance ou replaçant dans un état de surveillance une centrale maître qui était dans un état d'alerte,
- pour informer le poste de contrôle d'une alarme d'au moins séparation lorsque l'état d'alerte a été maintenu pendant un temps supérieur à un temps de pré-alarme déterminé.

La centrale maître peut également comporter un ou des moyens correspondants à ceux listés précédemment et qui la concernent.

On comprend que l'invention n'est pas limitée à une mise en oeuvre dans le milieu du travail mais peut être appliquée à tout environnement dans lequel des objets sont mis à disposition de personnes comme par exemple la location de matériel, de jeux...

La présente invention va maintenant être exemplifiée sans pour autant en être limitée avec la description qui suit en relation avec les figures suivantes:
la Figure 1 qui représente schématiquement un système dans un exemple de mise en oeuvre,
la Figure 2 qui représente un organigramme d'un exemple de fonctionnement du système.

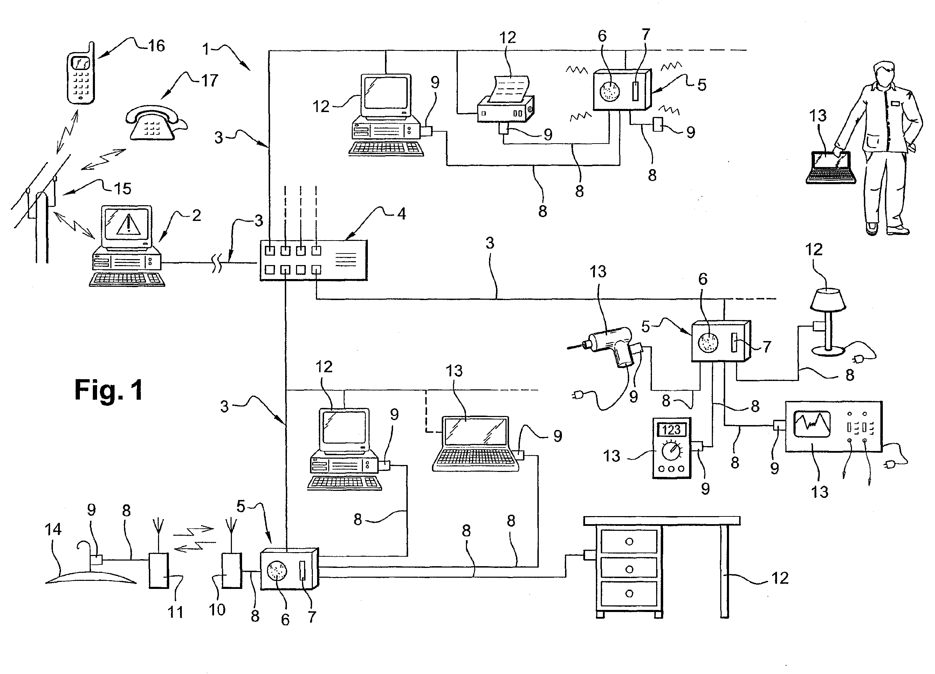

A titre d'exemple on a schématisé sur la Figure 1 une entreprise dont une partie du personnel est sédentaire et une autre mobile avec pour chacun de ces groupes des objets qui leurs sont plus spécifiques. Par exemple le personnel du service de dépannage de cette entreprise peut être amené à se déplacer et les outils dont il dispose peuvent donc être empruntés et sortir de l'entreprise. De même le personnel du service commercial peut être amené à sortir de l'entreprise pour visiter des clients en emportant des objets nomades. Par contre, une autre partie du personnel qui est sédentaire utilise des objets qui ne sont normalement pas destinés à être déplacés. On a donc référencé sous la référence 12 des objets qui ne sont normalement pas destinés à être déplacés (sur la Figure 1: ordinateur de bureau, imprimante, lampe d'éclairage, tiroir de bureau) et sous la référence 13 ceux qui peuvent être déplacés (sur la Figure 1: ordinateur portable, perceuse, voltmètre, oscilloscope). On comprend que cette distinction est arbitraire et est seulement faite à titre d'exemple pour expliquer l'invention. L'entreprise dispose d'un réseau informatique que l'on a représenté sous forme filaire sous la référence 3. On comprend que ce réseau peut être quelconque, notamment en ce qui concerne sa structure et/ou topographie (étoile, anneau, arborescent... leurs combinaisons) que physiquement (localisé dans un étage, sur plusieurs bâtiments, sur plusieurs sites...). Pour signifier ce fait on a représenté un équipement 4 du réseau sur la Figure 1. De plus, une partie du réseau peut utiliser les ondes radiofréquences pour les transmissions. De préférence le réseau est un réseau classiquement utilisé, par exemple du type ETHERNET avec un protocole classique TCP-IP.

Un poste de contrôle, typiquement un micro-ordinateur 2 ou équivalent, est connecté au réseau. Le poste de contrôle 2, dans une version évoluée, est également relié à un réseau téléphonique extérieur 15, notamment RTC, pour communication vocale avec un téléphone portable 16 ou fixe 17. Le poste de contrôle peut également être relié à l'extérieur pour communiquer des données avec un équipement informatique distant (autre micro-ordinateur notamment) par messagerie, échange de fichiers... l'exemple typique étant l'INTERNET.

Des centrales maître 5 sont reliées au réseau 3. De préférence, la liaison entre la centrale maître 5 et le réseau est filaire et l'alimentation de la centrale maître est assurée par le réseau. Une centrale maître 5 comporte un générateur de sons 6, notamment haut-parleur ou vibreur (« buzzer »), et un lecteur 7 d'un moyen d'identification individuelle des utilisateurs (employés de l'entreprise) ainsi que des moyens électroniques permettant son fonctionnement (microprocesseur ou micro-contrôleur). La centrale maître 5 est reliée par des liaisons filaires 8 à des détecteurs 9 disposés en relation avec les objets 12, 13 à surveiller. Les détecteurs et centrales maître permettent au moins de savoir si l'objet est ou non en relation avec le détecteur, ce qui correspond aux statuts de séparation (plus généralement de coupure, débranchement de détecteur déplacement d'objet ...) et de mise en relation détecteur et objet. Les détecteurs peuvent être de divers types, passifs ou actifs et dans ce dernier cas, du type numérique avec une mémoire permettant en outre de stocker au moins une identification de l'utilisateur autorisé. De préférence, chaque centrale maître 5 possède un identifiant unique et chaque détecteur possède également un identifiant unique pour une centrale maître donnée. Lors de chaque changement de statut, le poste de contrôle 2 est informé par réception de l'identification de la centrale maître et du détecteur concernés.

Les centrales maîtres comportent de préférence des moyens de surveillance des liaisons aux détecteurs et des détecteurs qui permettent une surveillance analogique ou numérique (transfert de données) suivant le type de détecteur (détecteur analogique ou numérique). Il est ainsi possible de pouvoir faire communiquer avec la centrale maître un boîtier de programmation externe, notamment pour entrer localement et stocker la/les identifications d'utilisateur autorisés dans la centrale elle-méme ou dans un détecteur numérique particulier. En cas d'entrée locale, la/les identifications sont de préférence transmises au poste de contrôle avec l'identifiant de centrale maître correspondant pour stockage. Il peut en effet être utile de disposer dans le poste de contrôle, d'images des contenus d'identifications utilisateurs autorisés stockés dans les centrales maîtres (notamment si le test d'autorisation est local : identification autorisée, ou liste, dans la centrale maître) ne serait-ce que pour pouvoir les rétablir si, pour une raison ou une autre, un des contenus était perdu par exemple parce que l'on remplace une centrale maître donnée ou un détecteur numérique particulier.

On comprend que dans un tel système on peut connaître précisément quel détecteur change de statut mais on ne peut garantir que cela correspond à un objet précis sauf à disposer de détecteurs qui obligent les utilisateurs à remettre l'objet en relation avec son détecteur spécifiquement attribué. Quoi qu'il en soit, il est possible d'associer dans une base de données du poste de contrôle la référence (numéro, dénomination ou autre) d'un objet particulier à un détecteur + sa centrale maître spécifiques (leurs identifiants). Il est également possible de réaliser une cartographie de l'entreprise (disposition des postes de travail, bureaux, locaux...) et de représenter sur le poste de contrôle dans ladite cartographie les différents détecteurs et centrales maîtres et, en cas d'alarme de visualiser d'une manière particulière (ou zoomer sur) le poste de travail/bureau/local concerné dans la cartographie.

La structure physique concrète du système est adaptée à l'environnement à surveiller : l'entreprise peut disposer de postes de travail dans un espace ouvert (« open space »), de postes de travail dans des bureaux cloisonnés, de postes de travail mobiles (camion de dépannage sur site). Ainsi, de préférence, on utilise une centrale maître par poste de travail d'un utilisateur et on pourra donc par exemple avoir plusieurs centrales maître par bureau si plusieurs utilisateurs partagent un même bureau. Il est toutefois possible de n'avoir qu'une centrale maître par bureau et qui est partagée entre les objets de plusieurs utilisateurs.

Afin de permettre les éventuels déplacements d'objets par des utilisateurs autorisés, c'est-à-dire sans produire d'alarme, que ces utilisateurs soient directs (ceux à qui on a confié la responsabilité directe sur les objets) ou indirects (personnes ayant un privilège les autorisant à déplacer des objets confiés à d'autres utilisateurs : services généraux par exemple), les utilisateurs ont des moyens d'identification lisibles par les centrales maître. Le système comporte donc une (ou plusieurs selon répartition) base de données d'autorisation permettant de gérer ces autorisations. Un utilisateur peut avoir une autorisation pour une centrale maître donnée. La base de données autorisation comporte ainsi au moins une identification (un seul utilisateur autorisé pour la centrale maître en question) ou, de préférence, une liste (plusieurs utilisateurs autorisés pour la centrale maître en question) d'identifications autorisées si elle est stockée dans une centrale maître donnée. Elle comporte une liste d'identifications + identifiant de centrale maître correspondante autorisés si elle est stockée dans le poste central (celui-ci est en relation avec plusieurs centrales maître et doit gérer les autorisations des utilisateurs en fonction de l'identifiant de centrale maître). De préférence, le poste de contrôle comporte une telle base de données d'autorisation et chaque centrale maître en reçoit des données d'autorisation la concernant, la recherche de correspondance se faisant dans la centrale maître. Dans une version plus évoluée, les autorisations peuvent être gérées jusqu'au niveau des détecteurs et dans ce cas les bases de données comportent en outre le numéro de détecteur autorisé pour la centrale maître et l'identification d'utilisateur en question. Dans ce dernier cas, de préférence, l'état neutralisé n'est effectif et/ou ne supprime l'état d'alarme de la centrale maître que si le détecteur + identification (+ éventuellement identifiant de centrale en cas de gestion par le poste de contrôle) est reconnu comme autorisé. Une recherche de correspondance positive correspond à une autorisation de déplacement d'objet(s) et donc à une lecture reconnue de moyen d'identification (l'identification lue correspond à une identification autorisée par le système).

Dans la partie haute de la Figure 1 on a représenté un vol d'un ordinateur portable par un individu ne possédant pas de moyen d'identification personnel lisible et/ou reconnu par la centrale maître correspondante et qui aurait pu permettre de neutraliser ladite centrale. L'ordinateur portable 13 a été séparé de son détecteur 9 et le poste de contrôle a été informé du changement de statut du détecteur concerné (en relation avec sa centrale maître), et après une durée (pré-alarme depuis une valeur nulle : passage immédiat en alarme jusqu'à quelques dizaines de secondes) d'alerte de la centrale maître (avertissement sonore) sans qu'il y ait eu lecture et reconnaissance du moyen d'identification autorisant le changement de statut dudit détecteur (en relation avec sa centrale maître), ladite centrale maître est passée dans un état d'alarme, ce dont le poste de contrôle est informé.

De préférence, le réseau et le poste de contrôle 2 sont à alimentation secourue afin que les centrales maître puissent continuer à être alimentées et la télésurveillance se poursuivre en cas de défaillance de l'alimentation secteur. Dans une version moins évoluée seule, la centrale maître comporte une source électrique électrochimique, de préférence batterie tampon, et au moins un avertissement/alarme peuvent être émis localement en cas de changement de statut d'un capteur associé.

Enfin, sur la partie gauche de la Figure 1, on a représenté l'utilisation d'un module esclave 10 permettant de créer une passerelle radio avec un module terminal radio 11 relié à un détecteur 9 par une liaison filaire 8 ou directement sur le module terminal 11. Il est ainsi possible d'équiper de détecteurs des objets difficilement accessibles par liaison filaire comme par exemple un vêtement sur un cintre dans une armoire.

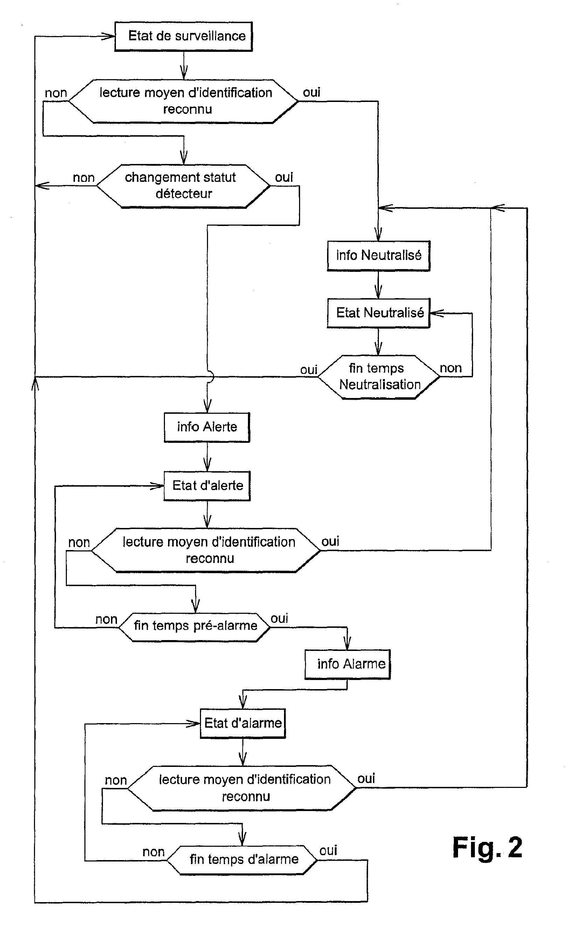

L'exemple de fonctionnement représenté Figure 2 concerne essentiellement la centrale maître. On n'y a pas représenté la transmission des changements de statut des détecteurs ou la réponse qu'elle émet vers le poste de contrôle lorsque celui-ci recherche la présence des centrales maître sur le réseau. On n'y a pas non plus représenté les étapes d'installation de détecteurs et de retrait de détecteurs effectués par des personnes autorisées et la prise en compte de ces changements autorisés par le poste de contrôle.

L'état de base d'une centrale maître est l'état de surveillance correspondant à l'attente soit d'une lecture d'un moyen d'identification qui, s'il est reconnu (identification connue de la centrale elle-même ou par l'intermédiaire du poste de contrôle), entraîne le passage dans l'état neutralisé pendant un temps de neutralisation déterminé, soit de changement de statut de détecteur qui entraîne le passage dans l'état d'alerte (si la centrale maître n'est pas dans l'état neutralisé).

De cet état d'alerte, au bout d'un temps d'alerte (pré-alarme) et en l'absence de lecture reconnue d'un moyen d'identification, la centrale maître passe dans l'état d'alarme.

De cet état d'alarme, au bout d'un temps d'alarme, la centrale maître repasse à l'état de surveillance après acquittement par le poste de contrôle ou pour faire suite à une lecture reconnue (autorisation) de moyen d'identification, la centrale repasse à l'état neutralisé (dans une variante la centrale maître peut repasser directement à l'état de surveillance).

Le poste de contrôle est informé de chaque changement d'état de la centrale maître par les procédures : info alerte ; info alarme ; info neutralisé. Dans une variante, l'information de neutralisation (procédure : info neutralisé) est distincte selon l'origine : selon qu'elle vient à partir de l'état de surveillance ou à partir de l'état d'alerte ou à partir de l'état d'alarme.

On comprend que cet organigramme est purement exemplatif et qu'il peut être modifié en fonction des besoins. Par exemple, l'état de neutralisation peut ne concerner que certains détecteurs et/ou l'état d'alerte omis (passe directement en état d'alarme) pour certains détecteurs. En pratique, le fonctionnement de la centrale maître doit permettre de surveiller et informer en continu et temps réel ou quasi-réel le poste central de tout changement de statut de détecteur, c'est-à-dire que même si la centrale maître est dans un état d'alerte ou d'alarme, tout nouveau changement de statut devra être détecté et le poste central informé. D'autre part, le poste de contrôle peut comporter une horloge et le système n'autoriseront (si la lecture du moyen d'identification est reconnue) une séparation objet-détecteur qu'à certaines heures, en dehors de ces heures une alarme se produira immédiatement.

## Revendications

1. Système de télésurveillance par centrale maître, d'objets (12,13) d'un utilisateur dans un lieu de base, la présence des objets dans ce lieu de base étant surveillée à distance par un poste de contrôle (2) informatique sur réseau informatique, **caractérisé en ce que** la télésurveillance s'effectue par communication par l'intermédiaire dudit réseau informatique entre le poste de contrôle et la centrale maître, et **en ce qu'**au moins une centrale maître (5) possédant un identifiant unique est reliée d'une part au réseau et d'autre part à au moins un détecteur (9) en relation avec un objet, la séparation du détecteur de l'objet ou sa mise en relation entraînant des changements de statut du détecteur transmis à la centrale maître, le poste de contrôle étant informé desdits changements de statut par communication par l'intermédiaire du réseau, et **en ce que** l'utilisateur possède éventuellement un moyen personnel d'identification lisible par un lecteur (7) de la centrale maître et **en ce que** ladite centrale maître comporte des moyens :
- pour, dans un état de surveillance, attendre les changements de statut des détecteurs et la lecture du moyen d'identification,
- pour passer dans un état d'alerte suite au changement de statut du détecteur correspondant au moins à la séparation,
- la centrale maître comportant en outre des moyens pour que dans l'état d'alerte ladite centrale maître émette un signal sonore d'alerte audible et/ou un signal visuel d'alerte visible,
- pour passer dans un état neutralisé pendant un temps de neutralisation déterminé lorsque l'utilisateur fait lire par la centrale maître son moyen personnel d'identification, l'identification lue correspondant à une identification autorisée par le système, ledit état neutralisé empêchant le passage dans un état d'alerte une centrale maître en état de surveillance ou replaçant dans un état de surveillance une centrale maître qui était dans un état d'alerte,
- pour informer par communication par l'intermédiaire du réseau, le poste de contrôle d'une alarme d'au moins séparation lorsque l'état d'alerte a été maintenu pendant un temps supérieur à un temps de pré-alarme déterminé.

2. Système selon la revendication 1, **caractérisé en ce que** la centrale maître comporte en outre des moyens pour que, lorsque la centrale maître a informé le poste de contrôle d'une alarme, ladite centrale maître émette pendant une durée d'alarme déterminée, ou jusqu'à acquittement par le poste de contrôle (2), un signal sonore d'alarme audible et/ou un signal visuel d'alarme visible, l'état neutralisé empêchant/arrêtant ladite émission sonore et/ou visuelle d'alarme.

3. Système selon l'une quelconque des revendications précédentes, **caractérisé en ce que** la centrale maître comporte en outre des moyens pour passer dans un état d'alerte suite à tout changement de statut du détecteur et pour informer le poste de contrôle d'une alarme dudit changement de statut lorsque l'état d'alerte a été maintenu pendant un temps supérieur à un temps de pré-alarme déterminé.

4. Système selon l'une quelconque des revendications précédentes, **caractérisé en ce qu'**au moins une identification d'utilisateur autorisé est stockée localement dans la centrale maître ou dans un détecteur relié à la centrale maître, la centrale maître ou le détecteur comportant une mémoire de stockage non volatile d'au moins une identification d'utilisateur autorisé.

5. Système selon la revendication 4, **caractérisé en ce que** l'identification d'utilisateur autorisé stocké dans la centrale maître ou le détecteur correspondant provient du poste de contrôle par le réseau ou a été stockée directement localement par connexion sur la centrale maître ou le détecteur d'un module de programmation locale.

6. Système selon l'une quelconque des revendications précédentes, **caractérisé en ce que** chaque détecteur possède un identifiant de détecteur unique pour une centrale maître donnée et que l'information de changement d'état d'un détecteur envoyée au poste de contrôle est accompagnée de l'identifiant de centrale maître et du détecteur concernés.

7. Système selon la revendication 6 **caractérisé en ce que** la centrale maître comporte en outre des moyens pour que le passage dans l'état neutralisé ne soit efficace que si l'identification lue correspond à une identification d'utilisateur autorisée pour la centrale maître correspondante et le détecteur correspondant.

8. Système selon l'une quelconque des revendications précédentes, **caractérisé en ce que** le poste de contrôle comporte des moyens permettant de vérifier périodiquement que chaque centrale maître reste connectée au réseau, et **en ce que** lorsqu'une centrale maître n'est plus connectée une alarme de déconnexion se déclenche dans le poste de contrôle.

9. Système selon l'une quelconque des revendications précédentes, **caractérisé en ce que** le réseau est filaire et chaque centrale maître est alimentée électriquement par le réseau.

10. Système selon l'une quelconque des revendications précédentes, **caractérisé en ce que** certain desdits objets peuvent être déplacés temporairement dudit lieu de base pour une utilisation en un autre lieu et **en ce que** le poste de contrôle comporte des moyens, d'une part, de comptage de la période de temps écoulée depuis la réception par le poste de contrôle de l'information de changement de statut correspondant à une séparation du détecteur et, d'autre part, d'avertissement lorsque ladite période de temps a dépassé une durée d'autorisation déterminée, la réception d'une information de changement de statut correspondant à une mise en relation annulant le comptage de ladite période.

11. Centrale maître (5) **caractérisée en ce qu'**elle est adaptée pour fonctionner dans le système (1) de télésurveillance sur réseau informatique de l'une quelconque des revendications précédentes et qu'elle possède un identifiant unique, qu'elle est reliée d'une part au réseau informatique et d'autre part à au moins un détecteur (9) en relation avec un objet, la séparation du détecteur de l'objet ou sa mise en relation entraînant des changements de statut du détecteur transmis à la centrale maître, un poste de contrôle étant informé desdits changements de statut par l'intermédiaire du réseau informatique, et **en ce qu'**un utilisateur possède éventuellement un moyen personnel d'identification lisible par un lecteur (7) de la centrale maître et **en ce que** ladite centrale maître comporte des moyens :
- pour, dans un état de surveillance, attendre les changements de statut des détecteurs et la lecture du moyen d'identification,
- pour passer dans un état d'alerte suite au changement de statut du détecteur correspondant au moins à la séparation,
- la centrale maître comportant en outre des moyens pour que dans l'état d'alerte ladite centrale maître émette un signal sonore d'alerte audible et/ou un signal visuel d'alerte visible,
- pour passer dans un état neutralisé pendant un temps de neutralisation déterminé lorsque l'utilisateur fait lire par la centrale maître son moyen personnel d'identification, l'identification correspondant à une identification autorisée par le système, ledit état empêchant le passage dans un état d'alerte une centrale maître en état de surveillance ou replaçant dans un état de surveillance une centrale maître qui était dans un état d'alerte,
- pour informer le poste de contrôle d'une alarme d'au moins séparation lorsque l'état d'alerte a été maintenu pendant un temps supérieur à un temps de pré-alarme déterminé.
